# FASCICULE DE BREVET EUROPEEN

(11) **EP 1 780 427 B1**
(45) Date de publication et mention de la délivrance du brevet: **12.01.2011**
(21) Numéro de dépôt: 06291606.9
(22) Date de dépôt: 16.10.2006
(51) Int. Cl.: F16B 21/08, F16L 37/091

(54) **Rondelle d'ancrage non agressive**
Nicht einschneidende Verankerungsscheibe
Not drastic anchorage disk

(30) Priorité: 26.10.2005 FR 0510927
(43) Date de publication de la demande: 02.05.2007
(73) Titulaire: LEGRIS SAS, 35000 Rennes (FR)
(72) Inventeur: Le Bars Nicolas, 35235 Thorigne (FR)
(74) Mandataire: Lavialle, Bruno François Stéphane

(56) Documents cités:
- WO-A-2004/015325
- FR-A- 2 810 087
- GB-A- 2 294 990

## Description

La présente invention concerne une rondelle d'ancrage d'un premier élément à un deuxième élément en engagement relatif (WO 2004/015325). Le premier élément est par exemple une portion d'extrémité d'un dispositif de raccordement et le deuxième élément est par exemple une portion d'extrémité taraudée d'un conduit. L'invention a également pour objet un dispositif de raccordement équipé d'une telle rondelle.

### ARRIERE PLAN DE L'INVENTION

La rondelle d'ancrage comprend généralement une partie annulaire à partir de laquelle s'étendent des dents inclinées par rapport à un axe central de la partie annulaire. La partie annulaire est montée sur la portion d'extrémité du dispositif de raccordement et chaque dent comporte deux faces latérales entre lesquelles s'étend une surface orientée vers le filet de la portion d'extrémité taraudée du conduit. L'installation du dispositif de raccordement est réalisée en enfilant, dans le taraudage, la portion d'extrémité du dispositif de raccordement. La retenue du dispositif de raccordement est assurée par une ou plusieurs dents dont l'extrémité libre est en appui contre le flanc du filet, les autres dents étant maintenues rabattues par le filet en appui contre les dents. L'installation est rapide et fiable.

Cependant, il est apparu que les dents de la rondelle d'ancrage usent ou détériorent le filet en provoquant un détachement de particules, voire de copeaux (si la paroi du conduit est en matière plastique) ou de limaille (si la paroi du conduit est en métal), qui viennent polluer le fluide transporté et risquent de détériorer un élément de circuit raccordé en aval du dispositif de raccordement. Des expérimentations ont montré que cette usure ou détérioration résulte de la morsure du sommet du filet par les bords latéraux de la surface orientée vers le filet des dents qui ne sont pas en appui par leur surface terminale contre le flanc du filet. Cette surface est une surface de glissement qui est en contact avec le sommet du filet et devrait normalement glisser sur celui-ci. Ces bords latéraux sont formés par le raccordement à angle droit de la surface de glissement avec les faces latérales. La rondelle d'ancrage étant obtenue par poinçonnage, les bords latéraux ont soit une forme très légèrement arrondie résultant de la coupe du métal au début du poinçonnage soit une forme en arête vive résultant du déchirement du métal à la fin du poinçonnage (selon que la surface destinée à être orientée vers le filet se trouve face au poinçon ou à l'opposé). Même si les dents sont moins agressives dans le premier cas, l'usure engendrée reste trop importante.

### OBJET DE L'INVENTION

Un but de l'invention est de fournir un moyen d'ancrage présentant les avantages des rondelles d'ancrage connues tout en étant dépourvu de l'inconvénient identifié ci-dessus.

### RESUME DE L'INVENTION

A cet effet, on prévoit, selon l'invention, une rondelle d'ancrage d'un premier élément et d'un deuxième élément en engagement relatif, la rondelle comportant une partie annulaire à partir de laquelle s'étend au moins une dent inclinée vers l'extérieur par rapport à un axe central de la partie annulaire, la partie annulaire étant destinée à être montée sur le premier élément et la dent comportant deux faces latérales entre lesquelles s'étend une surface de glissement sensiblement orientée vers le deuxième élément, ladite surface étant reliée aux faces latérales par des portions de raccordement, la dent étant conformée pour qu'au moins une des portions de raccordement s'étende en retrait d'au moins une partie de ladite surface de glissement de manière que la portion de raccordement soit maintenue à distance du deuxième élément.

Ainsi, la partie de raccordement n'est pas en contact avec le deuxième élément de sorte qu'elle ne pénètre pas dans le deuxième élément et n'engendre ni usure ni détérioration de celui-ci.

Selon différents modes de réalisation :
- la surface de glissement est chanfreinée au voisinage de la portion de raccordement,
- la surface de glissement a une partie de forme convexe,
- la dent est incurvée autour d'un axe longitudinal de la dent,
- la dent comporte un pli longitudinal formant la partie de forme convexe,
- la dent comprend une couche de recouvrement.

Ces différents modes de réalisation permettent de manière simple de maintenir éloignée la partie de raccordement du deuxième élément.

L'invention a également pour objet un dispositif de raccordement comprenant un corps tubulaire comportant une première extrémité et une deuxième extrémité pour coopérer respectivement avec un premier conduit et un deuxième conduit, la première extrémité étant agencée pour être engagée dans une portion d'extrémité taraudée du premier conduit et étant équipée d'une rondelle d'ancrage dans la portion d'extrémité taraudée, les dents de la rondelle s'étendant vers l'extérieur de la partie annulaire, la rondelle d'ancrage présentant l'une des caractéristiques énoncées précédemment.

Par ailleurs, la rondelle d'ancrage est généralement rapportée sur le corps tubulaire du dispositif de raccordement. Plus précisément, la rondelle d'ancrage est reçue dans une gorge du corps tubulaire. Le montage de la rondelle nécessite alors que le corps soit en deux parties, généralement encliquetées, augmentant le coût de fabrication du corps tubulaire. Par ailleurs, la rondelle d'ancrage est libre en rotation sur le corps qui peut alors pivoter par rapport au premier conduit, ce qui peut être gênant dans certaines applications et l'adjonction d'un moyen d'indexage complique la fabrication. La fixation de l'organe d'ancrage sur le corps est d'une manière générale délicate et un risque de perte de l'organe d'ancrage avant montage du dispositif de raccordement dans le premier conduit existe dans certaines configurations. Pour résoudre ce problème, il est possible de surmouler le corps tubulaire sur l'organe d'ancrage. Ceci augmente toutefois le coût de fabrication du corps tubulaire.

L'invention a en outre pour objet un dispositif de raccordement comprenant un corps tubulaire comportant une première extrémité et une deuxième extrémité pour coopérer respectivement avec un premier conduit et un deuxième conduit, la première extrémité étant agencée pour être engagée dans une portion d'extrémité taraudée du premier conduit et étant équipée d'une rondelle d'ancrage comportant une couche de recouvrement s'étendant sur la partie annulaire, le corps tubulaire et la couche de recouvrement de la partie annulaire étant en matière plastique et la partie annulaire de la rondelle d'ancrage étant fixée au corps tubulaire par une soudure de la couche de recouvrement au corps tubulaire.

Ainsi, la couche de matière plastique permet d'une part de fixer la rondelle d'ancrage au corps tubulaire et d'autre part assure le contact de la dent avec le filet en évitant un usinage du filet générateur de copeaux qui risqueraient de polluer le fluide transporté ou d'endommager des dispositifs raccordés au circuit de transport de fluide en aval du dispositif de raccordement.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique en perspective d'une rondelle d'ancrage conforme à un premier mode de réalisation de l'invention,
- la figure 2 est une vue en coupe, selon le plan II de la figure 1, d'une dent de cette rondelle,
- les figures 3 à 6 sont des vues analogues à celle de la figure 2 d'une dent selon, respectivement, des deuxième, troisième, quatrième, cinquième modes de réalisation,
- la figure 7 est une vue en coupe d'un dispositif de raccordement, selon un premier mode de réalisation, équipé d'une rondelle selon le cinquième mode de réalisation,
- les figures 8 et 9 sont des vues analogues à la figure 7 de dispositifs de raccordement, selon deux autres modes de réalisation, équipés respectivement d'une rondelle conforme au premier et au quatrième modes de réalisation.

### DESCRIPTION DETAILLEE DE L'INVENTION

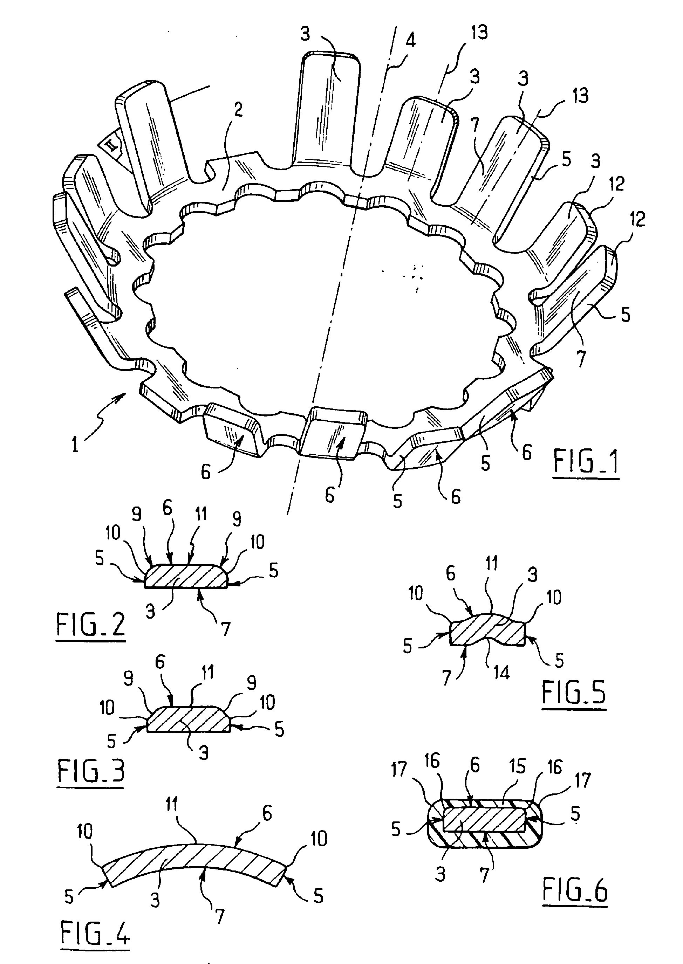

En référence aux figures 1 et 2, la rondelle d'ancrage conforme au premier mode de réalisation de l'invention, généralement désignée en 1, comprend une partie annulaire 2 ayant une circonférence externe à partir de laquelle s'étendent vers l'extérieur des dents 3. Les dents 3 sont inclinées par rapport à un axe central 4 de la partie annulaire 2. Chaque dent 3 comprend deux faces latérales 5 entre lesquelles s'étendent une surface 6 (cette surface est appelée dans la suite surface de glissement 6) à l'opposé de l'axe central 4 et une surface opposée 7 du côté de l'axe central 4. La surface de glissement 6 comprend des portions d'extrémité 9 arrondies reliées aux bords 10 de raccordement aux faces latérales 5 (les portions d'extrémité 9 ne sont pas visibles sur la figure 1). Les bords 10 sont ainsi en retrait de la portion centrale 11 de la surface de glissement 6. Chaque dent comprend en outre une surface d'extrémité ou surface terminale 12. La rondelle d'ancrage 1 est réalisée en métal, ici en acier.

Cette rondelle d'ancrage 1 est destinée à équiper un dispositif de raccordement comportant un corps tubulaire comportant une première section de connexion agencée pour être introduite dans une portion d'extrémité taraudée d'un premier conduit et une deuxième section de connexion agencée pour retenir de façon étanche un deuxième conduit. La partie annulaire 2 de la rondelle d'ancrage 1 est par exemple reçue, de façon connue en elle-même, dans une gorge ménagée sur la première section de connexion. La surface de glissement 6 est destinée à être orientée sensiblement vers la paroi de la portion d'extrémité taraudée du premier conduit.

Certaines des dents 3 ont la face d'extrémité 12 de leur extrémité libre en appui contre un flanc du filet tandis que d'autres dents ont leur surface de glissement 6 en appui contre le sommet de filet qui les rabat vers l'axe central 4. Les faces d'extrémité 12 coopèrent par frottement avec les flancs des filets pour s'opposer au retrait du dispositif de raccordement. Les portions d'extrémité 9 maintiennent les bords 10 à distance du filet. Les bords 10 ne peuvent donc pas abîmer le filet du premier conduit.

Pour limiter encore l'usure du filet, la face d'extrémité 12 de chaque dent 3 peut être agencée pour être parallèle au flanc du filet lorsqu'elle est appliquée contre celui-ci. La face d'extrémité 12 peut ainsi avoir un angle correspondant à celui du filet.

Selon un deuxième mode de réalisation représenté à la figure 3, les portions d'extrémité 9 sont formées par des chanfreins. Les bords 10 sont ainsi en retrait de la portion centrale 11 de la surface de glissement 6.

Selon un troisième mode de réalisation représenté à la figure 4, les dents 3 sont incurvées autour d'un axe longitudinal 13 de la dent 3 de manière que la surface de glissement 6 présente une courbure convexe. Les bords 10 sont ainsi en retrait de la portion centrale 11 de la surface de glissement 6.

Selon un quatrième mode de réalisation représenté à la figure 5, les dents 3 comportent un pli longitudinal 14 de manière que la surface de glissement 6 présente une portion centrale 11 en forme de nervure dont les bords 10 sont en retrait.

Selon un cinquième mode de réalisation représenté à la figure 6, les dents 3 comprennent une couche de recouvrement 15 en matière plastique, ici du polyamide. La surépaisseur de la couche de recouvrement 15 permet d'obtenir en regard des bords latéraux 16 formés lors du poinçonnage de la rondelle d'ancrage 1 des portions arrondies 17 de rayon plus grand. Les portions arrondies 17 ne risquent que peu ou pas de détériorer le filet. La couche de recouvrement s'étend également sur la face d'extrémité 12. La couche de recouvrement 15 peut être obtenue par projection ou dépôt électrostatique de matière plastique en poudre sur le métal puis cuisson, par projection de résine non polymérisée sur le métal puis polymérisation, par trempage dans une matière plastique liquide...

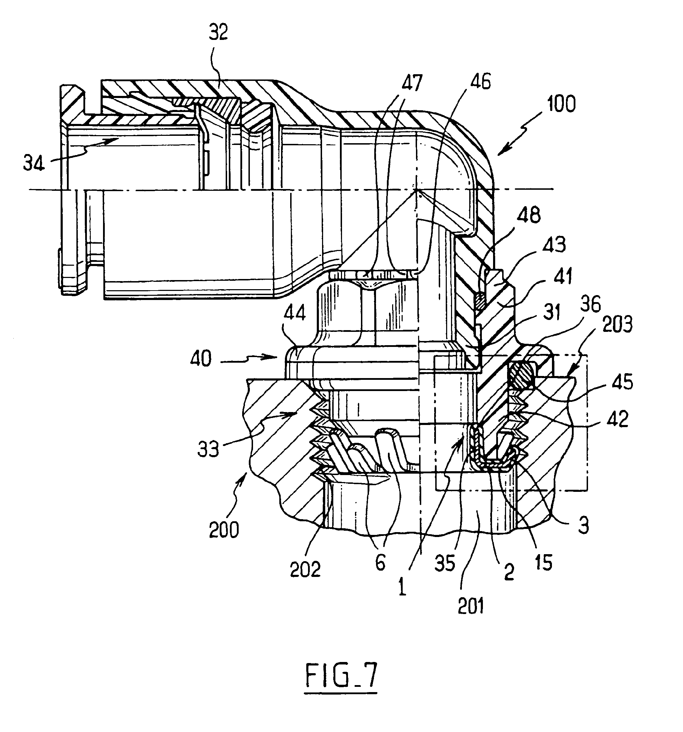

Un dispositif de raccordement adapté à la rondelle d'ancrage 1 du cinquième mode de réalisation va maintenant être décrit en référence à la figure 7.

Le dispositif de raccordement est agencé pour raccorder une extrémité de conduite (non visible sur les figures) à un élément de circuit. Le dispositif de raccordement est agencé pour être monté sur un élément de circuit, généralement désigné en 200, comportant un conduit 201 ayant une portion d'extrémité 202 débouchant sur une surface 203 de l'élément de circuit 200. L'élément de circuit 200 peut être un élément émetteur ou récepteur de fluide, comme par exemple une autre conduite, une pompe, un distributeur, un actionneur, une vanne...

Le dispositif de raccordement conforme au premier mode de réalisation de l'invention comprend un corps tubulaire, généralement désigné en 100, présentant ici une forme coudée à 90°. Le corps tubulaire 100 est réalisé en une seule pièce de matière plastique telle que du polyamide.

Le corps tubulaire 100 comprend une première portion d'extrémité 31 pourvue de moyens, portant la référence générale 33, de son ancrage dans la portion d'extrémité 202 du canal 201, et une deuxième extrémité 32 pourvue d'un logement de réception de l'extrémité de conduite et de moyens, généralement désignés en 34, pour y assujettir de façon étanche l'extrémité de conduite. Les moyens d'assujettissement étanches 34 sont ici des moyens de connexion instantanée qui sont connus en eux-mêmes (voir par exemple le document FR-A-2 810 087) et ne seront donc pas détaillés ici. Ces moyens d'assujettissement peuvent également être des moyens de connexion non instantanée.

Les moyens d'ancrage 33 comportent une embase, généralement désigné en 40, d'appui sur la surface 203 de l'élément de circuit 200. L'embase 40 comporte une douille 41 ayant une première extrémité 42 destinée à être introduite dans la portion d'extrémité 202 du canal 201 et une deuxième extrémité 43 destinée à s'étendre en saillie de celui-ci.

La douille 41 est pourvue extérieurement entre ses deux extrémités 42, 43 d'une collerette 44 ayant une surface inférieure destinée à prendre appui sur la surface 203 de l'élément de circuit 200. La surface inférieure de la collerette 44 est pourvue d'une gorge plane recevant de façon classique un élément d'étanchéité 45 annulaire et déformable.

Le corps tubulaire 100 est reçu dans la douille 41 de l'embase 40 à coulissement entre une position de fonctionnement et une position de démontage. Le corps tubulaire 100 et l'embase 40 comprennent des moyens réciproques de crabotage qui sont agencés de telle manière qu'ils sont dégagés les uns des autres lorsque le corps tubulaire 100 est en position de fonctionnement (le corps tubulaire 100 est alors libre en rotation par rapport à l'embase 40) et qu'ils coopèrent les uns avec les autres lorsque le corps tubulaire 100 est en position de démontage (le corps tubulaire 100 est alors solidaire en rotation de l'embase 40). Ces moyens réciproques de crabotage comprennent ici des saillies axiales 46 agencées sur le corps tubulaire 100 et des renfoncements axiaux 47 agencés sur l'extrémité 43 de la douille 41 de l'embase 40 pour recevoir les saillies axiales 46 du corps tubulaire 100 lorsque celui-ci est en position de démontage.

Sur l'extrémité 42 est fixée une rondelle d'ancrage 1 possédant une circonférence externe divisée en une pluralité de dents 3 agencées de telle manière que la rondelle d'ancrage 1 soit élastiquement déformable entre un état ouvert dans laquelle la rondelle d'ancrage 1 a un diamètre externe supérieur à un diamètre interne de la portion d'extrémité 202 du canal 201 et un état refermé dans lequel la rondelle d'ancrage 1 a un diamètre externe inférieur au diamètre interne de la portion d'extrémité 202 du canal 201.

La partie annulaire 2 de la rondelle d'ancrage 1 comprend un manchon 35 reçu dans l'extrémité 42 de la douille 41. La rondelle d'ancrage 1 et le manchon 35 sont tous deux en métal recouvert de la couche de recouvrement 15 en matière plastique. La rondelle d'ancrage 1 et le manchon 35 peuvent être en une seule pièce ou avoir été soudées l'une à l'autre. Le manchon 35 est relié à l'extrémité 42 de la douille 41 par une soudure 36 résultant d'une fusion locale de la couche de recouvrement 15 et de la paroi de l'extrémité 42. La soudure est de préférence réalisée par friction.

La mise en place du dispositif de raccordement est effectuée en introduisant en force la portion d'extrémité 42 de la douille 41 dans la portion d'extrémité 202 du canal 201 jusqu'à ce que l'embase 40 arrive en butée contre la surface 203. Au moins une des dents 3 de la rondelle d'ancrage 1 est alors écartée et reçue entre deux filets de la portion d'extrémité 202.

Le démontage est lui réalisé en amenant le corps tubulaire 100 dans sa position de démontage et en faisant pivoter celui-ci de manière à dévisser le dispositif de raccordement.

On remarquera qu'il est également possible lors du montage de visser légèrement le dispositif de raccordement pour bien appliquer l'embase 40 contre la surface 203.

La surface de glissement 6 des dents en appui contre le sommet du filet glisse contre ce dernier sans que les bords latéraux de la surface de glissement ne viennent mordre dans le sommet du filet.

On notera qu'un élément d'étanchéité 48 annulaire et déformable est intercalé entre deux épaulements appartenant pour l'un au corps tubulaire 100 et pour l'autre à la douille 41. L'élément d'étanchéité 48 assure une fonction de rappel élastique du corps tubulaire 100 en position de fonctionnement. En outre, lorsque le circuit dans lequel est implanté le dispositif de raccordement est sous pression, le fluide sous pression repousse le corps tubulaire 100 en position de fonctionnement.

Des dispositifs de raccordement selon deux autres modes de réalisation vont maintenant être décrits.

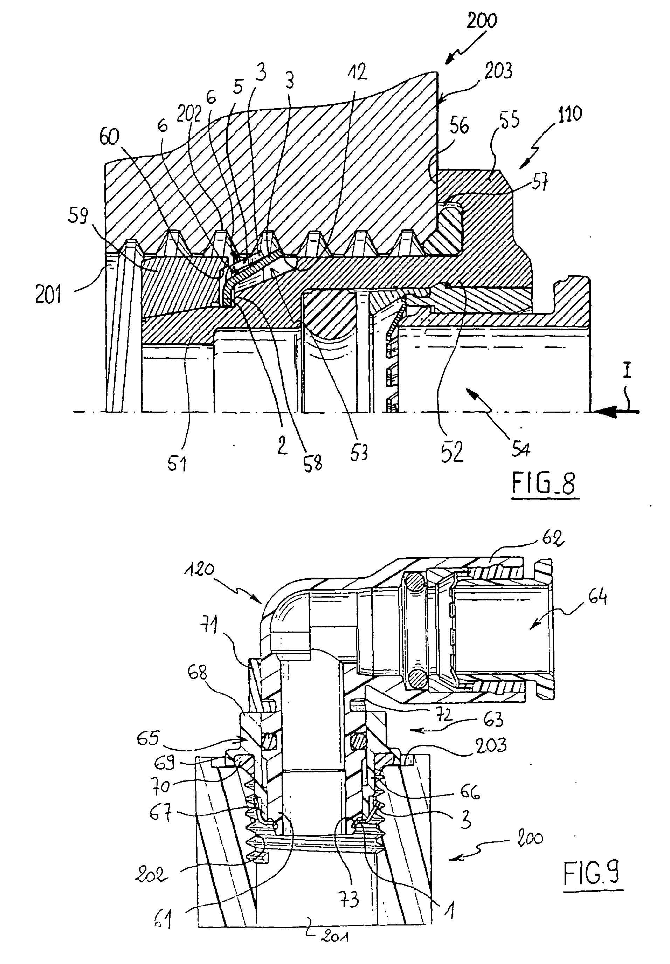

En référence à la figure 8, le dispositif de raccordement conforme au deuxième mode de réalisation est un raccord instantané qui comprend un corps 110 tubulaire rectiligne, comportant une première extrémité 51 pourvue de moyens, généralement désignés en 52, de son ancrage dans la portion d'extrémité 202 du canal 201, et une deuxième extrémité 52 pourvue d'un logement de réception de l'extrémité de conduite et de moyens, généralement désignés en 54, pour y assujettir de façon étanche l'extrémité de conduite. Les moyens 54 sont connus en eux-mêmes. A titre indicatif, la deuxième extrémité 52 est pourvue d'un alésage débouchant divisé axialement en trois parties à savoir, de droite à gauche, une première partie de grand diamètre pour recevoir un insert et un joint d'étanchéité annulaire, une deuxième partie dont le diamètre correspond sensiblement au diamètre extérieur de la conduite à insérer dans ce raccord et une troisième partie qui a un diamètre intérieur sensiblement égal au diamètre intérieur de cette conduite et qui se prolonge jusqu'à la première extrémité 51. L'insert comporte une gorge qui constitue un logement pour une rondelle d'accrochage pourvue intérieurement de dents de retenue de la conduite qui sera introduite dans l'alésage. Un poussoir tubulaire est monté dans l'insert pour être mobile à coulissement de façon connue en soi entre une position sortie inactive dans laquelle la rondelle d'accrochage est simplement en appui sur le nez de ce poussoir et une position rentrée dans laquelle le nez 35 soulève la totalité des dents de la rondelle d'accrochage 17.

Le corps 110 comprend ici une tête 55 délimitant un épaulement 56 en saillie radiale de la surface externe du corps 110 pour définir une butée à l'enfoncement du raccord dans le taraudage 202. Une rainure circulaire 57 est ménagée dans l'épaulement 56 autour du corps 110 pour recevoir un joint d'étanchéité.

Les moyens d'ancrage 53 comprennent ici une rondelle d'ancrage 1 du corps 110 dans le taraudage, qui est montée dans une gorge externe 58 du corps 110 définie par une face radiale du corps A et une face 60 d'une douille 59 qui est montée sur la surface externe du corps 110. La douille 59 peut être fixée par collage ou par emmanchement conique. La rondelle d'ancrage est conforme à celle du premier mode de réalisation (figure 2). La face 60 a une forme tronconique concave. La forme tronconique concave de la face 60 forme une butée empêchant que les dents de la rondelle d'ancrage ne se retournent sous un effort d'extraction qui serait exercé sur le corps 110.

En référence à la figure 9, le dispositif de raccordement conforme au troisième mode de réalisation de l'invention comprend un corps tubulaire, généralement désigné en 120, présentant ici une forme coudée à 90°.

Le corps tubulaire 120 comprend une première extrémité 61 pourvue de moyens, portant la référence générale 63, de son ancrage dans la portion d'extrémité 202 du canal 201, et une deuxième extrémité 62 pourvue d'un logement de réception de l'extrémité de conduite et de moyens, généralement désignés en 64, pour y assujettir de façon étanche l'extrémité de conduite. Les moyens d'assujettissement étanches 64 sont ici des moyens de connexion instantanée qui sont connus en eux-mêmes (voir par exemple le document FR-A-2 810 087) et ne seront donc pas détaillés ici. Ces moyens d'assujettissement peuvent également être des moyens de connexion non instantanée.

Les moyens d'ancrage 13 comportent une rondelle d'ancrage 1 conforme au quatrième mode de réalisation et une embase, généralement désigné en 65, d'appui sur la surface 203 de l'élément de circuit 200.

La rondelle d'ancrage 1 possède une circonférence externe divisée en une pluralité de dents agencées de telle manière que la rondelle d'ancrage 16 soit élastiquement déformable entre un état ouvert dans laquelle la rondelle d'ancrage 1 a un diamètre externe supérieur à un diamètre interne de l'extrémité de canal 202 et un état refermé dans lequel la rondelle d'ancrage 1 a un diamètre externe inférieur au diamètre interne de l'extrémité de canal 202.

La rondelle d'ancrage 1 est au repos dans son état ouvert.

La rondelle d'ancrage 1 est reçue dans une gorge externe 73 de l'extrémité 61 du corps tubulaire 120.

L'embase 65 comporte une douille 66 ayant une première extrémité 67 destinée à être introduite dans l'extrémité de canal et une deuxième extrémité 68 destinée à s'étendre en saillie de celui-ci.

La douille 66 est pourvue extérieurement entre ses deux extrémités 67, 68 d'une collerette 69 ayant une surface inférieure destinée à prendre appui sur la surface 203 de l'élément de circuit 1. La surface inférieure de la collerette 69 est pourvue d'une gorge plane recevant de façon classique un élément d'étanchéité 70 annulaire et déformable.

Le corps tubulaire 120 est reçu dans la douille 66 de l'embase 65 à coulissement entre une position de fonctionnement et une position de démontage qui seront détaillées ci-après pour chacun des modes de réalisation.

Lorsque le corps tubulaire 120 est dans sa position de fonctionnement, les dents de la rondelle d'ancrage 1 sont en appui contre l'extrémité 67 de la douille 66 qui constitue une butée axiale pour les dents 18 et maintient la rondelle d'ancrage 1 dans son état ouvert.

Lorsque le corps tubulaire 120 est dans sa position de démontage, les dents de la rondelle d'ancrage 1 échappent à leur appui sur l'extrémité 67 de la douille 66 et la rondelle d'ancrage 1 est dans son état refermé.

Le dispositif de raccordement comprend des moyens de retenue du corps tubulaire 120 dans sa position de fonctionnement. Ces moyens comprennent un anneau élastique fendu 71 reçu de façon amovible dans une gorge 72 ménagée extérieurement sur le corps tubulaire 120 de manière qu'en position de fonctionnement l'anneau élastique fendu 71 s'étend en saillie du corps tubulaire et prend appui axialement sur l'extrémité 68 de l'embase 65 pour s'opposer à l'enfoncement du corps tubulaire 120 vers sa position de démontage.

La mise en place du dispositif de raccordement sur l'élément de circuit 1 est réalisée par enfoncement puis éventuellement vissage. La solidarisation en rotation de la rondelle d'ancrage 1 par rapport au corps 120 est par exemple assuré par collage, par l'emboîtement d'un ergot solidaire de la rondelle dans un logement du corps 120 ou par la réception d'une partie des dents de la rondelle entre des nervures axiales du corps.

Pour extraire le dispositif de raccordement 120, l'anneau élastique fendu 71 est ôté avant que le corps tubulaire 120 soit enfoncé dans sa position de démontage.

Lors de ce mouvement d'enfoncement, les dents de la rondelle d'ancrage 1 quittent leur appui de l'extrémité 67 de la douille 66 de sorte que les dents retournent élastiquement dans leur position de repos : la rondelle d'ancrage 1 est alors dans son état refermé. Il est dès lors possible d'exercer un effort de traction sur la partie du corps tubulaire 120 en saillie de l'extrémité de canal 202 pour extraire le dispositif de raccordement hors de l'extrémité de canal 202. La rondelle d'ancrage 1 assure une solidarisation axiale du corps tubulaire 120 avec l'embase 65, les dents de la rondelle d'ancrage 1 en état refermé entraînant également l'embase 65 par appui contre l'extrémité 67 (en l'absence de résistance à l'extraction, l'effort d'extraction est insuffisant pour déformer les dents et amener la rondelle d'ancrage 1 dans son état ouvert).

Bien entendu, l'invention n'est pas limitée au mode de réalisation décrit et englobe toute variante entrant dans le cadre de l'invention défini par les revendications.

En particulier, la couche de recouvrement peut être localisée aux endroits de la dent risquant de détériorer le filet.

La rondelle d'ancrage peut également être soudée à une partie fixe par rapport à l'extrémité 31 du corps tubulaire ou directement sur le corps tubulaire.

Le corps tubulaire eut avoir une autre forme que celle représentée et notamment une forme droite.

La rondelle peut en outre être rapportée de manière amovible sur le corps tubulaire 100.

Les rondelles d'ancrage conformes à l'invention sont chacune utilisables avec différents types de dispositifs de raccordement. Les rondelles d'ancrage décrites sont ainsi toutes utilisables avec tous les dispositifs de raccordement décrits.

Par ailleurs, l'invention s'applique à l'insertion de dispositifs de raccordement dans d'autres logements que des taraudages et par exemple des alésages pourvus de gorge(s) ou d'arête(s) en saillie dans l'alésage... Le fait que les bords latéraux de la surface de glissement soient en retrait de celle-ci demeure intéressant car cet agencement empêche une usure des arêtes présentes dans l'alésage par ces bords latéraux.

## Revendications

1. Rondelle d'ancrage (1) d'un premier élément et d'un deuxième élément en engagement relatif l'un dans l'autre, la rondelle comporte une partie annulaire (2) à partir de laquelle s'étend au moins une dent (3) **caractérisée en ce que** la dent (3) est inclinée vers l'extérieur par rapport à un axe central (4) de la partie annulaire, la partie annulaire étant destinée à être montée sur le premier élément et la dent comportant deux faces latérales (5) entre lesquelles s'étend une surface de glissement (6) destinée à être orientée sensiblement vers le deuxième élément, ladite surface étant reliée aux faces latérales par des portions de raccordement (10), la dent est conformée pour qu'au moins une des portions de raccordement s'étende en retrait d'au moins une partie de ladite surface de manière que la portion de raccordement soit maintenue à distance du deuxième élément.

2. Rondelle selon la revendication 1, dans laquelle ladite surface (6) est chanfreinée au voisinage de la portion de raccordement (10).

3. Rondelle selon la revendication 1, dans laquelle ladite surface (6) a une partie (11) de forme convexe.

4. Rondelle selon la revendication 3, dans laquelle la dent (3) est incurvée autour d'un axe longitudinal (13) de la dent.

5. Rondelle selon la revendication 3, dans laquelle la dent (3) comporte un pli longitudinal (14) formant la partie de forme convexe.

6. Rondelle selon la revendication 1, dans laquelle la dent (3) comprend une couche de recouvrement (15).

7. Dispositif de raccordement comprenant un corps tubulaire (100) comportant une première extrémité (31) et une deuxième extrémité (32) pour coopérer respectivement avec un premier conduit et un deuxième conduit, la première extrémité étant agencée pour être engagée dans une portion d'extrémité taraudée du premier conduit et étant équipée d'une rondelle d'ancrage (1) dans la portion d'extrémité taraudée, les dents (3) de la rondelle s'étendant vers l'extérieur de la partie annulaire (2) **caractérisée en ce que** la rondelle d'ancrage est conforme à l'une quelconque des revendications précédentes.

8. Dispositif de raccordement selon la revendication 7, dans lequel la rondelle d'ancrage est conforme à la revendication 6, la partie annulaire (2) comportant une couche de recouvrement, le corps tubulaire et la couche de recouvrement de la partie annulaire sont en matière plastique et la partie annulaire de la rondelle d'ancrage est fixée au corps tubulaire par une soudure de la couche de recouvrement au corps tubulaire.

## Claims

1. An anchor washer (1) for anchoring a first element and a second element in relative engagement, the washer comprising an annular portion (2) from which there extends at least one tooth (3), **characterized in that** the tooth is inclined relative to a central axis (4) of the annular portion, the annular portion being designed for mounting on the first element, and the tooth having two side faces (5) between which there extends a sliding surface (6) for being oriented substantially towards the second element, said surface being connected to the side faces via coupling portions (10), the tooth is shaped so that at least one of the coupling portions is set back from at least a portion of said surface so that the coupling portion is kept at a distance from the second element.

2. A washer according to claim 1, in which said surface (6) is chamfered in the vicinity of the coupling portion (10).

3. A washer according to claim 1, in which said surface (6) has a portion (11) that is convex in shape.

4. A washer according to claim 3, in which the tooth (3) is curved about a longitudinal axis (13) of the tooth.

5. A washer according to claim 3, in which the tooth (3) includes a longitudinal fold (14) forming the portion of convex shape.

6. A washer according to claim 1, in which the tooth (3) includes a covering layer (15).

7. A coupling device comprising a tubular body (100) having a first end (31) and a second end (32) for cooperating respectively with a first duct and with a second duct, the first end being arranged to be engaged in a tapped end portion of the first duct and being fitted with an anchor washer (1) in the tapped end portion, the teeth (3) of the washer extending outwards from the annular portion (2), wherein the anchor washer is a washer according to any one of the preceding claims.

8. A coupling device according to claim 7, in which the anchor washer is in accordance with claim 6, the annular portion (2) having a covering layer, the tubular body and the covering layer of the annular portion being made of plastics material, and the annular portion of the anchor washer is secured to the tubular body by welding the layer covering to the tubular body.

## Patentansprüche

1. Verankerungsscheibe (1) zum Verankern eines ersten Elements und eines zweiten Elements in relativem Eingriff miteinander, wobei die Scheibe einen ringförmigen Abschnitt (2) umfasst, von dem mindestens ein Zahn (3) absteht, **dadurch gekennzeichnet, dass** der Zahn (3) gegenüber einer Mittelachse (4) des ringförmigen Abschnittes nach außen geneigt ist, wobei der ringförmige Abschnitt dazu bestimmt ist, an dem ersten Element montiert zu werden und der Zahn zwei seitliche Flächen (5) umfasst, zwischen denen sich eine Gleitoberfläche (6) erstreckt, die dazu bestimmt ist, im Wesentlichen zum zweiten Element gerichtet zu sein, wobei die genannte Oberfläche mit den seitlichen Flächen über Verbindungsabschnitte (10) verbunden ist, wobei der Zahn so geformt ist, dass mindestens einer der Verbindungsabschnitte gegenüber mindestens einem Abschnitt der genannten Oberfläche zurückversetzt ist, derart, dass der Verbindungsabschnitt beabstandet zu dem zweiten Element gehalten wird.

2. Scheibe nach Anspruch 1, wobei die genannte Oberfläche (6) nahe dem Verbindungsabschnitt (10) abgeschrägt ist.

3. Scheibe nach Anspruch 1, wobei die genannte Oberfläche (6) einen Abschnitt (11) konvexer Form hat.

4. Scheibe nach Anspruch 3, wobei der Zahn (3) um eine Längsachse (13) des Zahns gekrümmt ist.

5. Scheibe nach Anspruch 3, wobei der Zahn (3) einen Längsfalz (14) umfasst, der den Abschnitt konvexer Form bildet.

6. Scheibe nach Anspruch 1, wobei der Zahn (3) eine Deckschicht (15) umfasst.

7. Verbindungsvorrichtung, umfassend ein rohrförmiges Gehäuse (100), das ein erstes Ende (31) und ein zweites Ende (32) umfasst, die dazu bestimmt sind, mit einer ersten Leitung bzw. einer zweiten Leitung zusammenzuwirken, wobei das erste Ende so ausgebildet ist, dass es mit einem mit einem Gewinde versehenen Endabschnitt der ersten Leitung in Eingriff gebracht werden kann, und in dem mit einem Gewinde versehenen Endabschnitt mit einer Verankerungsscheibe (1) ausgestattet ist, wobei sich die Zähne (3) der Scheibe von dem ringförmigen Abschnitt (2) nach außen erstrecken, **dadurch gekennzeichnet, dass** die Verankerungsscheibe gemäß einem der vorhergehenden Ansprüche ausgebildet ist.

8. Verbindungsvorrichtung nach Anspruch 7, wobei die Verankerungsscheibe gemäß Anspruch 6 ausgebildet ist, wobei der ringförmige Abschnitt (2) eine Deckschicht umfasst, wobei das rohrförmige Gehäuse und die Deckschicht des ringförmigen Abschnitts aus Kunststoff sind und der ringförmige Abschnitt der Verankerungsscheibe an dem rohrförmigen Gehäuse durch Verschweißen der Deckschicht mit dem rohrförmigen Gehäuse befestigt ist.
